(19) Europäisches Patentamt / European Patent Office / Office européen des brevets

(11) **EP 1 524 877 B1**

(12) **FASCICULE DE BREVET EUROPEEN**

(45) Date de publication et mention
de la délivrance du brevet:
**14.05.2008 Bulletin 2008/20**

(51) Int Cl.:
***H04Q 7/38*** *(2006.01)*

(21) Numéro de dépôt: **04300634.5**

(22) Date de dépôt: **28.09.2004**

(54) **Procédé de controle de la consommation d'un téléphone mobile en veille**

Verfahren zur Steuerung des Leistungsverbrauchs eines Mobiltelefons

Method for controlling the power consumption of a mobile telephone in idle state.

(84) Etats contractants désignés:
**DE GB**

(30) Priorité: **16.10.2003 FR 0350689**

(43) Date de publication de la demande:
**20.04.2005 Bulletin 2005/16**

(73) Titulaire: **SAGEM Communication**
**75015 Paris (FR)**

(72) Inventeur: **Meyer, Laurent**
**92150 Suresnes (FR)**

(74) Mandataire: **Camus, Olivier Jean-Claude**
**SCHMIT-CHRETIEN-SCHIHIN**
**8, place du Ponceau**
**95000 Cergy (FR)**

(56) Documents cités:
**WO-A-02/03733        GB-A- 2 346 507**

## Description

DOMAINE TECHNIQUE DE L'INVENTION

Le domaine de l'invention est, d'une façon générale, celui de la téléphonie mobile. Le procédé selon l'invention peut être mise en oeuvre aussi bien au moyen de téléphones mobiles fonctionnant selon les normes GSM, UMTS ou toute autre norme de téléphonie cellulaire. Il trouvera un avantage particulier à être mis en oeuvre au moyen de téléphones mobiles bimodes, c'est à dire aptes à communiquer sur deux réseaux différents, par exemple le réseau GSM et le réseau UMTS, la diminution de la consommation en énergie rendue possible grâce au procédé selon l'invention pouvant alors être particulièrement significative.

Dans ce domaine, les opérateurs de téléphonie cellulaire proposent un service de télécommunication sur un territoire donné. A cet effet, différents équipements sont organisés sous la forme d'un PLMN (Public Land Mobile Network en anglais, pour Réseau Mobile Public Terrestre), système qui assure un accès radio au réseau téléphonique général, le RTCP. Le territoire est partagé en zones de localisation (LA), elles-mêmes divisées en cellules de taille variable, dépendant essentiellement de la densité de population de chaque cellule. Chaque cellule comporte une station de base, qui est constituée d'un ensemble d'émetteurs/récepteurs couvrant la totalité de la cellule à laquelle ils sont associés. Les stations de base constituent les points d'entrée et de sortie des réseaux de télécommunication cellulaires. Tout téléphone mobile doit, à chaque instant, être reconnu et à l'écoute d'une station de base pour pouvoir communiquer sur le réseau.

Il est capital que le téléphone mobile soit en permanence raccordé à la station de base qui lui est la plus favorable. En effet, un téléphone mobile doit être en mesure de recevoir des appels dès qu'il est placé sous tension, même lorsqu'il se trouve dans un état de veille. Ce raccordement permanent est assuré par une voie balise qui est spécifique à chaque station de base. Dès la mise sous tension, un téléphone mobile cherche à se caler sur la voie balise de la station de base la plus favorable appartenant à un réseau autorisé. En état de veille, il surveille constamment le signal reçu sur cette voie et sur les voies des stations de base voisines. Lorsque le téléphone mobile est calé sur une voie balise correspondant à une cellule donnée, cette cellule est appelée cellule de service. Dès que cela est nécessaire, il se cale sur une nouvelle voie et change ainsi de cellule de service. Des mécanismes de sélection et de resélection de cellule de service sont donc activés en permanence dès que le téléphone mobile est mis sous tension, y compris lorsqu'il est placé dans un état de veille. Afin de faciliter la compréhension du procédé selon l'invention, ces mécanismes sont à présent détaillés dans le cas des réseaux GSM, les mécanismes dans le cas des réseaux UMTS étant tout à fait comparables.

La voie balise d'une station de base correspond à une fréquence particulière choisie parmi l'ensemble des fréquences allouées à cette station de base. Un téléphone mobile mesure périodiquement sur cette voie le signal qu'il reçoit. Il détermine par cette simple mesure de champ s'il est à la portée de la station de base, et plus généralement s'il en est proche ou éloigné. Chaque voie balise comprend également des signaux de forme spécifique et des informations systèmes. Les signaux de forme spécifique permettent aux téléphones mobiles de détecter la présence de la station de base et de se caler en fréquence et en temps. Les informations systèmes donnent l'identité du réseau et ses caractéristiques d'accès.

Physiquement, une voie balise correspond donc aux deux éléments suivants :

- une fréquence descendante, également appelée fréquence balise, sur laquelle un signal modulé, de puissance constante, est émis ; le téléphone mobile utilise la fréquence balise pour effectuer des mesures de puissance ;
- un ensemble de canaux logiques en diffusion, regroupés dans la fréquence balise. Ils permettent au téléphone mobile d'acquérir des paramètres analogiques et logiques nécessaires pour être relié au réseau. Ces canaux sont les suivants :

    - le canal FCCH (Frequency Correction Channel en anglais, pour canal de correction en fréquence) pour le calage en fréquence ; ce canal permet au téléphone mobile de se caler sur la fréquence nominale de la station de base associée à la voie balise considérée;
    - le canal SCH (Synchronisation Channel en anglais, pour canal de synchronisation) pour la synchronisation en temps; les impulsions diffusées sur ce canal par la station de base ont une longue séquence d'apprentissage qui permet au mobile de se synchroniser sur ladite station de base ;
    - le canal BCCH (Broadcast Control Channel en anglais, pour canal de contrôle de diffusion) pour la diffusion des informations locales du système ; ce canal ne saute pas en fréquence et est diffusé à puissance constante.

La voie balise est déterminée selon un ensemble de critères :

- des critères radio, qui permettent d'assurer à l'utilisateur que le téléphone est en mesure de communiquer avec une qualité de service satisfaisante ;
- des critères administratifs, afin d'orienter le téléphone mobile vers un PLMN autorisé, par exemple le PLMN nominal de l'abonné. Ces critères ne seront pas détaillés par la suite ; en effet, ils n'interviennent que lorsque l'utilisateur voyage à l'étranger.

Le choix de la voie balise implique donc un processus de détermination de cellule de service, qui est activé soit lorsque le téléphone mobile est mis sous tension (processus de sélection de la cellule), soit lorsqu'il sort d'une cellule (processus de resélection d'une cellule).

Le processus de sélection d'une cellule peut être décomposé en deux étapes principales : une étape de constitution d'une liste de voies balises candidates, et une étape d'étude des voies balises candidates. Une voie balise candidate est propre à une cellule candidate à la resélection, ces cellules étant le plus souvent des cellules directement adjacentes à la cellule de service à laquelle est raccordée le téléphone mobile à l'instant considéré (cellule de service courante).

Pour la constitution de la liste des voies balises candidates, on peut essentiellement distinguer deux éventualités:

- soit les précédentes activités du téléphone mobile sont prises en considération , et on procède à une sélection de différentes voies balises en accédant à une liste de voies balises, correspondant notamment aux fréquences porteuses des canaux BCCH, précédemment mémorisée par le téléphone mobile pour le PLMN sélectionné lors de la précédente mise sous tension ;
- soit la liste de voies balises est communiquée par le réseau, lorsque le téléphone mobile n'a précédemment mémorisé aucune information relative à ces voies balises. On procède alors à une sélection des voies balises sur l'ensemble des fréquences possibles. Le téléphone mobile doit alors recevoir, récupérer l'ensemble des fréquences porteuses du système (124 dans le cas du GSM), mesurer pour chacune le champ reçu et réaliser une moyenne sur plusieurs mesures (dans le cas du GSM, au moins 5 mesures sur au moins 3 secondes par fréquence écoutée).

Dans cette éventualité, le téléphone mobile sélectionne les 30 fréquences porteuses les mieux reçues, et mémorise celles qui supportent effectivement une voie balise. Une liste de voies balises candidates est ainsi constituée, et on se retrouve dans une situation similaire à celle de la première éventualité.

Une fois la liste de voies balises candidates constituée, on procède, au sein du téléphone mobile, à l'étude de ces voies balises. L'objectif de cette étape est la détermination d'une cellule convenable, c'est à dire d'une cellule remplissant les conditions suivantes :

- la cellule convenable doit faire partie du PLMN sélectionné ;
- la cellule convenable ne doit pas être interdite, par exemple pour cause de surcharge due à un trop grand nombre de téléphones mobiles calés sur cette cellule ;
- la cellule convenable ne doit pas se trouver dans une zone de localisation interdite ;
- l'affaiblissement radio entre le téléphone mobile et la station de base doit être inférieur à un seuil préalablement déterminé par l'opérateur du réseau de télécommunication considéré ; cet affaiblissement est donné par un critère C1 détaillé par la suite.

Lorsque le téléphone mobile a déterminé la meilleure cellule convenable, notamment sur la base du critère d'affaiblissement C1, elle détermine l'identité de la zone de localisation correspondante et s'y inscrit. La cellule choisie est alors désignée comme cellule de service. Après acceptation de l'inscription par le réseau, le téléphone mobile se cale sur la voie balise de la cellule de service en attente d'un appel et en état de surveillance permanente afin de détecter une sortie de la cellule de service. Un téléphone mobile passant d'une cellule à une autre au sein d'une même zone de localisation ne provoque pas une telle opération de mise à jour de localisation au sein du réseau considéré.

Une fois que le téléphone mobile est calé sur une voie balise de la cellule de service qu'il a sélectionnée, il est nécessaire d'une part de surveiller si des appels sont destinés au téléphone mobile et d'autre part de vérifier en permanence que le téléphone mobile se trouve toujours à l'intérieur de la cellule de service, ou qu'une autre cellule serait meilleure selon les critères précédemment exposés, pour effectuer, le cas échéant, une opération de resélection; à cet effet, le téléphone mobile dans un état de veille effectue régulièrement deux types d'opérations : une opération de lecture d'informations, et une opération de réalisation de mesures.

Les informations lues sont essentiellement celles diffusées sur le canal PCH (Paging Channel en anglais, pour canal de messagerie ou canal d'appel des téléphones mobiles, ou encore canal de paging), qui est un canal de l'interface radio utilisé pour rechercher un téléphone cellulaire et l'avertir qu'un appel lui est destiné. Le téléphone mobile doit donc activer régulièrement, avec une période Tp, son module radio pour démoduler les informations qui le concernent dans le canal de paging. La période Tp, dite période de paging ou période de messagerie, est fonction de paramètres du réseau dépendant de la planification cellulaire choisie par l'opérateur. Elle varie donc d'un réseau à l'autre, mais également d'une cellule à l'autre au sein d'un même réseau. Par exemple (en ms):

- en GSM : Tp=K1*235, où K1 est le paramètre BSPA_MFRMS, défini dans la norme GSM, dont la valeur peut varier de 2 à 9 ;
- en GPRS : Tp=(1/K2)*15358, où K2 est le paramètre SPLIT_PG_CYCLE, défini dans la norme GPRS, dont la valeur peut varier de 1 à 352 ;
- en UMTS : Tp=K3*10, où K3 est le paramètre DRX_CYCLE_LENGTH, défini dans la norme UMTS, dont la valeur peut varier de 8 à 512.

Les mesures effectuées sont les suivantes : lorsque le téléphone mobile est calé sur une cellule de service, il reçoit, sur le canal BCCH de cette cellule de service, la liste des porteuses à étudier, qui est établie par l'opérateur et qui correspond aux voies balises des cellules de voisinage. Le téléphone mobile reçoit alors périodiquement le champ reçu sur chaque porteuse BCCH. Il effectue une moyenne de ce champ sur au moins 5 mesures ou sur environ 5 secondes. L'ensemble de ces mesures permet de déterminer la liste des six cellules les plus puissantes dans le voisinage de la cellule de service. Cette liste est réactualisée au minimum chaque minute. Le téléphone mobile tente de décoder les données diffusées sur le canal BCCH toutes les 30 secondes pour la cellule de service, et toutes les 5 minutes sur les six cellules voisines les plus puissantes. A cet effet, le téléphone mobile doit se synchroniser sur les cellules voisines. En cas d'échec, les tentatives de synchronisation sont arrêtées au bout de 0,5 secondes afin de limiter la consommation d'énergie qui découle de ces tentatives.

Le critère d'affaiblissement C1 est utilisé dans ces mesures; il est basé sur une mesure de champ reçu pour la cellule de service courante uniquement. Un critère de resélection, C2, peut également intervenir. L'objet du critère C2 est de comparer les cellules voisines à la cellule de service courante. Les critères d'affaiblissement et de resélection C1 et C2 ne mettent en oeuvre que des mesures de puissance ; ils sont mesurés au minimum une fois toutes les 5 secondes.

La sélection de la cellule de service initiale est donc réalisée en choisissant celle dont le critère de sélection C1 est le plus important. Après la première sélection d'une cellule de service, on peut entamer un processus de resélection notamment si l'un des événements suivants est observé :

- le paramètre d'affaiblissement C1 montre un affaiblissement important du champ de la cellule de service courante, la valeur de ce champ passant sous la valeur du seuil limite ;
- il existe une meilleure cellule relativement au paramètre de resélection C2.

Selon la norme, le critère d'affaiblissement C1 est de la forme :

$$C1 = A - \text{Max}(B, 0),$$

Où A est égal à la différence entre un niveau de signal reçu par le téléphone mobile (RXLEV) et un niveau minimum de réception requis dans la cellule (RXLEV_ACCESS_MIN), cette valeur étant reçue par le téléphone mobile par le canal BCCH ; et où B est égal à la différence entre un niveau de puissance maximale à laquelle le téléphone mobile est autorisé à émettre lors de l'accès au système (MS_TXPWR_MAX_CCH), et P, puissance d'émission maximale du téléphone mobile.

Le niveau de puissance maximale à laquelle le téléphone mobile est autorisé à émettre correspond à la puissance nécessaire pour que la station de base reçoive correctement le téléphone mobile quelle que soit sa position dans la cellule, et en particulier lorsqu'il est en bordure de cellule.

On considère donc que le critère d'affaiblissement est satisfait quand le critère d'affaiblissement C1 est positif.

Pour les opérations de resélection de cellule, le téléphone mobile utilise le critère de resélection C2. Ce critère est égal au critère d'affaiblissement C1 auquel on ajoute un offset CELL_RESELECT_OFFSET, diffusé sur le canal BCCH, qui permet de favoriser plus ou moins une cellule par rapport à ses voisines. Selon différents exemples de mise en oeuvre, le critère de resélection C2 peut également incorporer un offset temporel destiné à défavoriser les cellules nouvellement placées dans la liste des 6 cellules candidates. Il peut encore incorporer un offset de changement de zone de localisation destiné à défavoriser une cellule présente dans une autre zone de localisation que la cellule de service.

Les algorithmes de resélection actuels prennent donc en considération de nombreux facteurs permettant d'assurer le meilleur lien radio entre une station de base et le téléphone mobile. Ces algorithmes s'appuient sur la comparaison de critères évolués faisant intervenir notamment le niveau de champ, divers offsets, des paramètres de puissance d'émission, des seuils de réception... Un processus de resélection n'a donc lieu que si une cellule voisine de la cellule de service a, pendant un certain temps, un meilleur critère de resélection C2 que la cellule de service sélectionnée jusqu'alors. La gestion d'offsets spécifiques par l'opérateur de téléphonie permet de freiner ou d'accélérer une resélection, soit définitivement, soit temporairement.

ARRIERE-PLAN TECHNOLOGIQUE DE L'INVENTION

Ainsi, contrairement aux postes téléphoniques des réseaux filaires, qui, en l'absence de communication en cours, sont totalement inactifs, les téléphones mobiles doivent conserver pendant leur état de veille un certaine activité pour écouter régulièrement leur canal de paging et pour effectuer des tâches de monitoring (mesures, détection) sur les cellules voisines ; ils consomment donc de l'énergie. A activité de monitoring constante, la consommation d'un téléphone mobile dans un état de veille peut varier de façon significative d'une cellule de service à l'autre, ou d'un réseau à l'autre, cette consommation étant alors dépendante uniquement des activités de paging du téléphone ; comme expliqué précédemment, ces activités contraignent le téléphone mobile à des phases de mise en service du module radio pour écouter le canal de paging avec une période Tp qui dépend de la cellule de service et du réseau choisi. Comme décrit auparavant, les critères de resélection ne prennent pas en considération les critères de consommation du téléphone mobile en veille, mais essentiellement la qualité du lien radio, pour évaluer les cellules candidates ; il apparaît donc que l'aspect consommation des téléphones mobiles dans un état de veille est jusqu'à présent négligé.

Dans l'état de la technique, on connaît notamment les demandes de brevet publiées sous les numéros EP 0 541 026, US 6 496 493, et UK 2 358 550 qui proposent essentiellement de limiter la consommation des téléphones mobiles lors des mécanismes de transfert automatique inter/intra cellulaire (handover), grâce auxquels le téléphone mobile peut transférer sa connexion d'une station de base vers une autre, ou, sur une station de base donnée, d'un canal radio vers un autre lors d'une communication en cours. WO 02/03733 décrit un procédé pour sélectioner une technologie d'accès différente de celle en cours d'utilisation sur la base d'un niveau de consommation du terminal dans chaque technologie. Mais ces mécanismes ne concernent pas les téléphones mobiles dans leur état de veille.

Par ailleurs, dans l'état de la technique, pour éviter qu'un téléphone mobile en état de veille ne consomme trop d'énergie lors de son déplacement sur la frontière de deux zones de localisation, on propose l'introduction, dans le critère de resélection, de l'offset, déjà évoqué, de changement de zone de localisation destiné à défavoriser une cellule présente dans une autre zone de localisation que la cellule de service. En effet, dans un tel cas, le téléphone mobile risquerait de sélectionner alternativement, à une fréquence élevée, des cellules appartenant à ces deux zones de localisation. Or chaque changement de zone de localisation entraîne une opération de mise à jour de la localisation, avec notamment une opération d'inscription auprès des stations de base concernées, ce qui d'une part engendre un trafic de signalisation important et d'autre part augmente la consommation du mobile en état de veille. On prévoit ainsi, dans la norme GSM, le paramètre CELL_RESELECT_HYSTERESIS, diffusé sur le canal BCCH, dans le critère de resélection C2. Il défavorise une cellule présente dans une autre zone de localisation que celle contenant la cellule de service et évite ainsi les allers-retours entre deux cellules de deux zones de localisation différentes. Ce paramètre ne prend cependant pas en considération la consommation du téléphone mobile dans un état de veille une fois qu'il est raccordé à une station de base. Le document WO 97/33448 propose une variante d'un tel mécanisme.

DESCRIPTION GENERALE DE L'INVENTION

Le procédé selon l'invention propose une solution aux problèmes et inconvénients qui viennent d'être exposés. Dans l'invention, on attache de l'importance à un critère de consommation lors d'un processus de resélection de cellules, le critère de resélection C2 faisant désormais, selon l'invention, intervenir un paramètre directement lié à la consommation du téléphone mobile en veille dans la cellule de service et dans les cellules voisines candidates. A cet effet, on prévoit par exemple d'exploiter une information relative à la fréquence de paging de la cellule de service et des cellules candidates. En effet, plus la fréquence de paging en vigueur dans une cellule est importante, plus les périodes de réveil du module radio du téléphone sont rapprochées et nombreuses, et plus la consommation de ce dernier est importante. On constitue ainsi, dans l'invention, un offset supplémentaire directement lié à la consommation du téléphone dans chaque cellule considérée. L'objectif essentiel est d'augmenter la durée d'autonomie des téléphones mobiles.

Dans un exemple particulier, on se limite, pour la mise en oeuvre du procédé selon l'invention, à des cellules candidates appartenant à une même zone de localisation, le procédé selon l'invention étant en effet particulièrement efficace pour économiser de l'énergie si aucune surconsommation due à des opérations de mise à jour de localisation n'interviennent. Différents critères et seuils sont respectés pour la mise en oeuvre du procédé selon l'invention.

L'invention concerne donc essentiellement un procédé de contrôle de la consommation d'un téléphone mobile dans un état de veille, apte à communiquer sur au moins un réseau de télécommunication cellulaire couvrant un territoire divisé en un ensemble de zones de localisation, chaque zone de localisation comportant un ensemble de cellules, caractérisé en ce que le procédé comporte les différentes étapes consistant à :

- établir, pour une cellule de service courante du téléphone mobile et un ensemble de cellules candidates, un critère de resélection dont un des paramètres, dit paramètre de consommation, est un niveau de consommation, pour chaque cellule considérée, du téléphone mobile dans son état de veille ;
- sélectionner comme nouvelle cellule de service, la cellule présentant le meilleur critère de resélection établi dans l'étape précédente.

Le procédé selon l'invention peut comporter une ou plusieurs caractéristiques supplémentaires, parmi les suivantes:

- la cellule présentant le meilleur critère de resélection est sélectionnée comme nouvelle cellule de service uniquement si elle a présenté le meilleur critère de resélection pendant une période de latence ;
- les cellules candidates appartiennent toutes à une même zone de localisation que la zone de localisation de la cellule de service courante ;
- le niveau de consommation du téléphone mobile pour chaque cellule considérée est déterminé en fonction d'une période de messagerie du téléphone mobile propre à chaque cellule considérée ;
- l'étape de sélection de la nouvelle cellule de service n'est réalisée que si le critère de resélection de la cellule de service courante est supérieur à un seuil minimal de resélection ;

- pour chaque cellule, le paramètre de consommation prend une valeur qui est obtenue au moyen d'une fonction d'un gain en consommation calculé entre la cellule de service courante et la cellule considérée ;
- la valeur du paramètre de consommation est bornée en valeur absolue par une valeur limite de correction pour le paramètre de consommation;
- la valeur limite de correction pour le paramètre de consommation, fixée par programmation, est inférieure ou égale à dix pour cent de la valeur du critère de resélection de la cellule de service courante ;
- le gain en consommation entre la cellule de service courante et chaque cellule candidate est égal au rapport entre la période de messagerie de la cellule de service courante et la période de messagerie de la cellule candidate considérée, ledit rapport étant pondéré par un coefficient de changement de réseau lorsque la cellule de service courante et la cellule candidate considérée fonctionnent selon deux technologies d'accès radio différentes ;
- le téléphone mobile est apte à communiquer sur un réseau GSM et sur un réseau UMTS, la cellule de service courante appartenant à l'un de ces deux réseaux, et au moins une cellule candidate appartenant à l'autre réseau.

L'invention et ses différentes applications seront mieux comprises à la lecture de la description qui suit et à l'examen des figures qui l'accompagnent.

BREVE DESCRIPTION DES FIGURES

Celles-ci ne sont présentées qu'à titre indicatif et nullement limitatif de l'invention. Les figures montrent :

- à la figure 1, un graphique illustrant la consommation des téléphones mobiles dans un état de veille en fonction de leur fréquence de paging ;
- à la figure 2, un graphique illustrant un cas de resélection de cellule, dans un premier cas de figure, suite à la mise en oeuvre du procédé selon l'invention ;
- à la figure 3, un graphique illustrant un cas de resélection de cellule, dans un deuxième cas de figure ;
- à la figure 4, un graphique illustrant un cas de resélection de cellule, dans un troisième cas de figure ;
- à la figure 5, un exemple d'une fonction donnant des valeurs du paramètre de consommation en fonction d'un gain en consommation calculé entre la cellule de service courante et une cellule candidate considérée.

DESCRIPTION DES FORMES DE REALISATION PREFEREES DE L'INVENTION

Dans la suite du document, l'invention est décrite, à titre d'exemple particulier de mise en oeuvre, on considère comme constante l'activité de monitoring des cellules candidates; on considère donc que la consommation en énergie des téléphones mobiles varie uniquement en fonction des activités de paging du téléphone mobile. Les notations suivantes sont utilisées par la suite :

- C2 : critère de resélection utilisé dans l'état de la technique pour une quelconque technologie d'accès radio;
- C'2 : critère de resélection utilisé dans le procédé selon l'invention pour une quelconque technologie d'accès radio;
- Tp : période de paging (ou de messagerie) ;
- A : coefficient de proportionnalité lié à la technologie d'accès radio (GSM, UMTS, GPRS...); ce coefficient dépend du téléphone mobile ;
- P : consommation du téléphone mobile en veille due à l'activité de paging ;
- Indice "i" : indice désignant la cellule de service courante ;
- Indice "j" : indice désignant une cellule candidate ;
- $G_{ij}$ : Gain en consommation d'une cellule i par rapport à une cellule j ; $G_{ij} = P_j/P_i$ ;
- $f(G_{ij})$ : paramètre de consommation ; il est une fonction du gain en consommation.
- S0 : seuil bas de prise en considération des critères d'activation, ou seuil minimal de resélection ;
- S1 : valeur limite de correction par le paramètre de consommation.

Dans les différents exemples illustrés, un critère de resélection pour une cellule est considéré comme le meilleur lorsque la valeur de ce critère est supérieure à celle des critères de resélection des autres cellules, conformément aux pratiques habituelles de l'état de la technique.

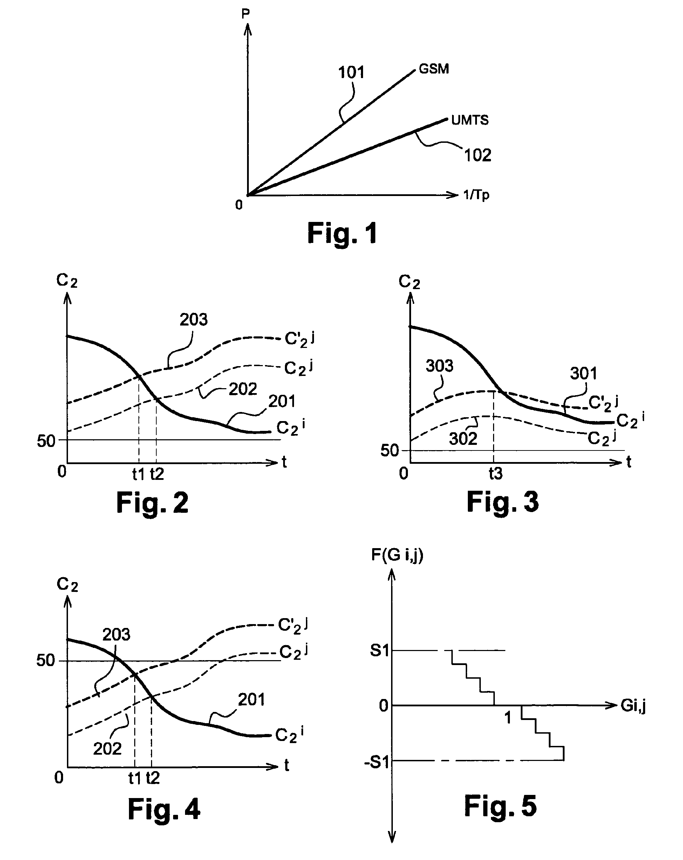

A la figure 1, on a représenté une première courbe 101 et une deuxième courbe 102 représentatives de fonctions donnant en ordonnée la consommation P d'un téléphone mobile en état de veille en fonction de la fréquence de paging, inverse de la période de paging Tp, donnée en abscisse. On voit que les fonctions sont des fonctions affines ; en ne tenant pas compte des activités de monitoring du téléphone mobile en veille, la consommation des téléphones mobiles est donc proportionnelle à la fréquence de paging.

Dans ces conditions, on peut écrire: $P_i = A_i \cdot (1/T_{pi})$ (équation 1)

La première courbe 101 correspond à une première technologie d'accès radio (RAT), par exemple GSM, et la deuxième courbe 102 correspond à une deuxième RAT, par exemple UMTS.

Aux figures 2 et 3, on a représenté respectivement un premier cas de figure et un deuxième cas de figure où on exécute une resélection de la cellule de service qui s'avère bénéfique en terme de consommation grâce au procédé selon l'invention. Le critère de resélection C2 est donné en ordonnée ; il évolue en fonction du temps, par exemple parce que le téléphone mobile en veille se déplace. Les courbes en traits pleins 201 et 301, présentes respectivement sur les figures 2 et 3, montrent l'évolution du critère de resélection C2 pour la cellule de service courante ; les courbes en traits pointillés 202, 203 et 302, 303 présentes respectivement sur les figures 2 et 3, montrent l'évolution du critère de resélection pour une cellule candidate ; les courbes 202 et 302 correspondent au critère de resélection C2 habituellement utilisé dans l'état de la technique, alors que les courbes 203 et 303 correspondent au critère de resélection C'2 intervenant dans le procédé selon l'invention.

A la figure 2, C'2j devient supérieur à C2i à partir d'un instant t1. Selon l'invention, la procédure de resélection démarre à partir de cet instant t1, la procédure de resélection consistant à désigner la cellule candidate comme nouvelle cellule de service. Grâce au procédé selon l'invention, on a ainsi pu anticiper le démarrage de la procédure de resélection, qui n'aurait débuté dans l'état de la technique, en se référant à la figure 2, qu'à un instant t2, ultérieur à l'instant t1, correspondant à l'instant où C2j devient supérieur à C2i.

A la figure 3, C'2j devient supérieur à C2i à partir d'un instant t3. Selon l'invention, la procédure de resélection démarre à partir de cet instant t3. Grâce au procédé selon l'invention, on a ainsi pu resélectionner une cellule candidate qui n'aurait pas été resélectionnée dans l'état de la technique, où aucun paramètre de consommation n'est pris en considération dans l'établissement du critère de resélection C2 ; en effet, comme on le voit à la figure 3, C2j ne devient jamais supérieur à C2i, et la cellule candidate est donc considérée dans l'état de la technique comme ayant un moins bon critère de resélection.

Dans une variante de l'invention, la désignation d'une cellule candidate comme nouvelle cellule de service n'intervient qu'après une certaine période de latence, période de latence pendant laquelle, ou au moins au début et à la fin de laquelle, C'2j est toujours supérieur à C2i.

Dans un exemple particulier de mise en oeuvre du procédé selon l'invention, on ne prend en considération le paramètre de consommation pour déclencher une procédure de resélection que si le critère de resélection C2 de la cellule de service courante est supérieur au seuil S0. Lorsque C2 est supérieur à S0, on considère en effet que la qualité du lien radio existant est suffisant, et que l'on peut donc prendre en considération le paramètre de consommation pour déterminer les critères de resélection des cellules candidates.

Cette condition est vérifiée aux figures 2 et 3. Par contre, à la figure 4, où on retrouve les mêmes courbes qu'à la figure 2 mais où le seuil S0 a été augmenté, cette condition n'est pas vérifiée à l'instant t1. Dans cet exemple, la procédure de resélection n'est donc pas redémarrée à l'instant t1, mais à partir de l'instant t2, comme c'était le cas dans l'état de la technique.

Conformément aux définitions qui ont été données, $C'2j = C2j + f(Gij)$, (équation 2), où $Gij = (Aj/Ai)$. $(Tpi/Tpj)$ (équation 3) en ne considérant que les consommations du téléphone en veille dues aux activités de paging. On peut dire que la consommation sur la cellule candidate est Gij fois plus importante que sur la cellule de service courante.

Ainsi, lorsque l'on considère une cellule de service courante et une cellule candidate appartenant à un même réseau de téléphonie cellulaire, qui utilise donc une unique RAT, on a $Gij = Tpi/Tpj$ (équation 4), les coefficients Ai et Aj étant alors égaux pour un téléphone mobile donné. Si on considère une cellule de service courante et une cellule candidate appartenant à deux réseaux de téléphonie cellulaire distincts, qui utilisent deux RAT différentes, l'équation 3 ne se simplifie pas ; les coefficients Ai et Aj, ou au moins le rapport Aj/Ai, doivent alors être connus ; ce rapport est mesurable par les constructeurs et peut être mémorisé au sein des téléphones mobiles. Il est désigné comme coefficient de changement de réseau.

La fonction f est une fonction paramétrable par l'opérateur ; elle dépend de la technologie d'accès radio considérée. Selon différents modes de mise en oeuvre du procédé selon l'invention, f répond à une ou plusieurs exigences parmi les suivantes :

- $f(Gij) = 0$ si $C2i < S0$ ;
- $f(Gij) = 0$ si $Gij = 1$ ;
- $f(Gij) > 0$ si $Gij < 1$ ;
- $f(Gij) < 0$ si $Gij > 1$ ;
- $|f(Gij)| < S1$.

La première exigence est une sécurité, déjà mentionnée, garantissant que les critères de consommation n'entrent en ligne de compte qu'à partir du moment où le lien radio est jugé de bonne qualité. Les exigences suivantes permettent de favoriser une cellule candidate sur laquelle le gain de consommation est inférieur à 1 (car on consomme moins dessus) et de défavoriser une cellule candidate sur laquelle le gain de consommation est supérieur à 1. La dernière exigence permet de limiter les effets des critères de consommation dans la procédure de resélection. On peut par exemple définir S1 par programmation de telle sorte qu'il n'excède pas dix pour cent de C2i. La figure 5 donne un exemple d'une fonction f respectant ces exigences.

La fonction f peut par exemple être décrite par une table de valeurs, comme c'est d'usage dans les recommandations ETSI. Différentes fonctions f peuvent être définies pour un même téléphone mobile. Par exemple pour un téléphone bimode GSM/UMTS, il faut définir :

- une fonction f pour la RAT GSM ;
- une fonction f pour la RAT UMTS ;
- une fonction f pour la resélection dual mode de GSM vers UMTS;
- une fonction f pour la resélection dual mode de UMTSvers GSM.

Par ailleurs, les seuils S0 et S1 sont déterminés par les opérateurs. Ils peuvent par exemple être diffusés dans les informations systèmes sur chaque cellule du réseau considéré. Pour empêcher l'activation des critères de consommation dans la procédure de resélection, il suffit de donner une valeur infinie à S0.

## Revendications

1. Procédé de contrôle de la consommation d'un téléphone mobile dans un état de veille, apte à communiquer sur au moins un réseau de télécommunication cellulaire couvrant un territoire divisé en un ensemble de zones de localisation, chaque zone de localisation comportant un ensemble de cellules, **caractérisé en ce que** le procédé comporte les différentes étapes consistant à :

   - établir, pour une cellule de service courante du téléphone mobile et un ensemble de cellules candidates, un critère de resélection (C2) dont un des paramètres, dit paramètre de consommation (f(Gij)), est un niveau de consommation déterminé en fonction d'une période de messagerie (Tp), pour chaque cellule considérée, du téléphone mobile dans son état de veille ;
   - sélectionner comme nouvelle cellule de service, la cellule présentant le meilleur critère de resélection établi dans l'étape précédente.

2. Procédé selon la revendication précédente **caractérisé en ce que** la cellule présentant le meilleur critère de resélection est sélectionnée comme nouvelle cellule de service uniquement si elle a présenté le meilleur critère de resélection pendant une période de latence.

3. Procédé selon la revendication précédente **caractérisé en ce que** les cellules candidates appartiennent toutes à une même zone de localisation que la zone de localisation de la cellule de service courante.

4. Procédé selon l'une au moins des revendications précédentes **caractérisé en ce que** l'étape de sélection de la nouvelle cellule de service n'est réalisée que si le critère de resélection (C2i) de la cellule de service courante est supérieur à un seuil minimal de resélection (S0).

5. Procédé selon l'une au moins des revendications précédentes **caractérisé en ce que**, pour chaque cellule, le paramètre de consommation (f(Gij)) prend une valeur qui est obtenue au moyen d'une fonction d'un gain en consommation (Gij) calculé entre la cellule de service courante et la cellule considérée.

6. Procédé selon la revendication précédente **caractérisé en ce que** la valeur du paramètre de consommation (f(Gij)) est bornée en valeur absolue par une valeur limite (S1) de correction pour le paramètre de consommation.

7. Procédé selon la revendication précédente **caractérisé en ce que** la valeur limite (S1) de correction pour le paramètre de consommation, fixée par programmation, est inférieure ou égale à dix pour cent de la valeur du critère de resélection de la cellule de service courante (C2i).

8. Procédé selon l'une au moins des revendications 6 à 8 et la revendication 4 **caractérisé en ce que** le gain en consommation (Gij) entre la cellule de service courante et chaque cellule candidate est égal au rapport entre la période de messagerie de la cellule de service courante et la période de messagerie de la cellule candidate considérée, ledit rapport étant pondéré par un coeffcient de changement de réseau lorsque la cellule de service courante et la cellule candidate considérée fonctionnent selon deux technologies d'accès radio différentes.

9. Procédé selon l'une au moins des revendications précédentes **caractérisé en ce que** le téléphone mobile est apte à communiquer sur un réseau GSM et sur un réseau UMTS, la cellule de service courante appartenant à l'un de ces deux réseaux, et au moins une cellule candidate appartenant à l'autre réseau.

## Claims

1. A method for controlling the power consumption of a mobile telephone in an idle state, able to communicate over at least one cellular telecommunication network covering a territory divided into a set of location areas, each location area comprising a set of cells, **characterized in that** the method comprises various steps consisting in :

   - establishing, for a current service cell of the mobile telephone and a set of candidate cells, a reselection criterion (C2), of which one of the parameters, known as the consumption parameter (f(Gij)), is a level of consumption determined according to a paging period (Tp), for each cell considered, of the mobile telephone in its idle state;
   - selecting as a new service cell, the cell presenting the best reselection criterion established in the previous step.

2. The method according to the previous claim, **characterized in that** the cell presenting the best reselection criterion is selected as a new service cell only if it presented the best reselection criterion during a latency period.

3. The method according to the previous claim, **characterized in that** the candidate cells all belong to the same location area as the location area of the current service cell.

4. The method according to at least one of the previous claims, **characterized in that** the step of selecting the new service cell is only carried out if the reselection criterion (C2i) of the current service cell is greater than a minimum reselection threshold (S0).

5. The method according to at least one of the previous claims, **characterized in that**, for each cell, the consumption parameter (f(Gij)) takes a value that is obtained by means of a consumption gain function (Gij) calculated between the current service cell and the considered cell.

6. The method according to the previous claim, **characterized in that** the value of the consumption parameter (f(Gij)) is limited in absolute value by a correction limit value (S1) for the consumption parameter.

7. The method according to the previous claim, **characterized in that** the correction limit value (S1) for the consumption parameter, set by programming, is less than or equal to ten percent of the value of the reselection criterion of the current service cell (C2i).

8. The method according to at least one of claims 6 to 8 and claim 4, **characterized in that** the consumption gain (Gij) between the current service cell and each candidate cell is equal to the ratio between the paging period of the current service cell and the paging period of the candidate cell considered, said ratio being weighted by a network change coefficient when the current service cell and the candidate cell considered operate according to two different radio access technologies.

9. The method according to at least one of the previous claims, **characterized in that** the mobile telephone is able to communicate over a GSM network and over a UMTS network, the current service cell belongs to one of these two networks and at least one candidate cell belongs to the other network.

**Patentansprüche**

1. Verfahren zum Steuern des Verbrauchs eines Mobiletelefons im Standbyzustand, das auf mindestens einem zellularen Telekommunikationsnetz kommunizieren kann, das ein Gebiet, das in eine Einheit von Lokalisierungszonen unterteilt ist, decken kann, wobei jede Lokalisierungszone eine Einheit von Zellen umfasst, **dadurch gekennzeichnet, dass** das Verfahren die verschiedenen folgenden Schritte aufweist, die bestehen aus:

- für eine aktuelle Servicezelle des Mobiletelefons und eine Einheit von Kandidatenzellen Erstellen eines Wiederauswahlkriteriums (C2), von dem ein Parameter, Verbrausparameter (f (Gij)) genannt, ein Verbrauchsniveau ist, das in Abhängigkeit von einer Mitteilungsdienstperiode (Tp) für jede betreffende Zelle des Mobiletelefons in seinem Standbyzustand bestimmt wird;
- Auswahl als neue Servicezelle der Zelle, die das beste Wiederauswahlkriterium, das im vorhergehenden Schritt bestimmt wurde, aufweist.

2. Verfahren nach dem vorhergehenden Anspruch, **dadurch gekennzeichnet, dass** die Zelle, die das beste Wiederauswahlkriterium aufweist, als neue Servicezelle nur ausgewählt wird, wenn sie das beste Wiederauswahlkriterium während einer Latenzzeitspanne aufgewiesen hat.

3. Verfahren nach dem vorhergehenden Anspruch, **dadurch gekennzeichnet, dass** die Kandidatenzellen alle zu einer gleichen Lokalisierungszone wie die Lokalisierungszone der aktuellen Servicezelle gehören.

4. Verfahren nach mindestens einem der vorhergehenden Ansprüche, **dadurch gekennzeichnet, dass** der Schritt des Auswählens der neuen Servicezelle nur ausgeführt wird, wenn das Wiederauswahlkriterium (C2i) der aktuellen Servicezelle größer ist als ein Mindestwiederauswahlschwellenwert (S0).

5. Verfahren nach mindestens einem der vorhergehenden Ansprüche, **dadurch gekennzeichnet, dass** für jede Zelle der Verbrauchsparameter (f(Gij)) einen Wert annimmt, der mittels einer Funktion eines Verbrauchsgewinns (Gij) erzielt wird, der zwischen der aktuellen Servicezelle und der in Betracht gezogenen Zelle berechnet wird.

6. Verfahren nach dem vorhergehenden Anspruch, **dadurch gekennzeichnet, dass** der Wert des Verbrauchsparameters (f(Gij)) im Absolutwert durch einen Korrekturgrenzwert (S1) für den Verbrauchsparameter begrenzt ist.

**7.** Verfahren nach dem vorhergehenden Anspruch, **dadurch gekennzeichnet, dass** der Korrekturgrenzwert (S1) für den Verbrauchsparameter, der durch Programmieren festgelegt wird, kleiner oder gleich zehn Prozent des Werts des Wiederauswahlkriteriums der aktuellen Servicezelle (C2i) ist.

**8.** Verfahren nach mindestens einem der Ansprüche 6 bis 8 und Anspruch 4, **dadurch gekennzeichnet, dass** der Verbrauchsgewinn (Gij) zwischen der aktuellen Servicezelle und jeder Kandidatenzelle gleich dem Verhältnis zwischen der Mitteilungsdienstperiode der aktuellen Servicezelle und der Mitteilungsdienstperiode der in Betracht gezogenen Kandidatenzelle ist, wobei das Verhältnis durch einen Netzwechselkoeffizienten gewichtet wird, wenn die aktuelle Servicezelle und die in Betracht gezogene Kandidatenzelle gemäß zwei unterschiedlichen Funkzugangstechniken funktionieren.

**9.** Verfahren nach mindestens einem der vorhergehenden Ansprüche, **dadurch gekennzeichnet, dass** das Mobiletelefon auf einem GSM- und auf einem UMTS-Netz kommunizieren kann, wobei die aktuelle Servicezelle zu einem dieser zwei Netze gehört, und mindestens eine Kandidatenzelle zum anderen Netz gehört.

P

101 GSM

UMTS
102

0 1/Tp

**Fig. 1**

$C_2$

203
$C'_2{}^j$
$C_2{}^j$
202
201
$C_2{}^i$

50

0 t1 t2 t

**Fig. 2**

$C_2$

303
301
$C'_2{}^j$
$C_2{}^j$
302

50

0 t3 t

**Fig. 3**

$C_2$

203
$C'_2{}^j$
50
$C_2{}^j$
201
202
$C_2{}^i$

0 t1 t2 t

**Fig. 4**

$F(G_{i,j})$

S1

0

1 $G_{i,j}$

-S1

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0541026 A
- US 6496493 B
- GB 2358550 A
- WO 0203733 A
- WO 9733448 A